# EUROPEAN PATENT SPECIFICATION

(11) **EP 2 743 132 B1**
(45) Date of publication and mention of the grant of the patent: **02.08.2017**
(21) Application number: 12008321.7
(22) Date of filing: 13.12.2012
(51) Int. Cl.: A01B 76/00, A01B 69/00, B60R 1/00, H04N 5/225, B60R 1/12, H04N 101/00

(54) **Driver vision support system**
Fahrer-Sichtunterstützungssystem
Système de support de vision du conducteur

(43) Date of publication of application: 18.06.2014
(73) Proprietor: CLAAS Tractor S.A.S., 78141 Vélizy-Villacoublay Cedex (FR)
(72) Inventor: Guillaume, Patrick, 92370 Chaville (FR)
(74) Representative: Gottschald, Jan

(56) References cited:
- DE-A1- 4 339 600
- DE-U1-202004 013 984
- US-A- 5 956 079
- US-A1- 2011 149 077

## Description

The invention is directed to a driver vision support system for a self propelled agricultural machine according to claim 1 and to a self propelled agricultural machine with such a driver vision support system according to claim 12.

The expression "self propelled agricultural machine" is to be understood in a broad sense. It not only includes all kinds of tractors for farming, but also tele-handlers or combines.

Today's self propelled agricultural machines normally may be used in a large quantity of applications. In order to adapt the agricultural machine to the respective task, the configuration of the agricultural machine may be varied by changing the mechanical set up of the agricultural machine. The variation of the mechanical set up may be performed for example by moving parts of the agricultural machine from a retracted to an extracted position. Another possibility for the variation of the configuration of the agricultural machine is to provide the agricultural machine with different attachment units like a front attachment unit or a rear attachment unit. Such attachment units may be mowers, swathers, plows or the like. The attachment units may be designed as rolling units or as units that are carried by the agricultural machine. Accordingly, an attachment unit in the present sense may be trailers such as forage wagons as well.

One drawback of the known agricultural machines is the fact that in many cases there remain different blind areas which are outside of the visual reach of the user. This means, that the user is not able to visualize obstacles that are located in those blind areas. This is especially true for the front area of a tractor which is provided with a long front section including the front axle and the engine hood, while the driver's cab is located in the rear of the tractor.

The situation is even worse if the agricultural machine is provided with different front attachment units or rear attachment units as shown in DE 20 2011 107 270 U1 for example. For this agricultural machine it is known to detect obstacles with sensors like cameras. However, it remains an unresolved challenge to provide the driver with sufficient information regarding the surrounding of the agricultural machine to ensure a safe operation.

A known driver vision support system (DE 20 2004 013 984 U1) comprises a number of wireless cameras, which may be attached to mechanical interfaces at the agricultural machine. An electric coupling of the attachable cameras to the interfaces is not provided. The cameras are battery driven and communicate with a central control via a wireless data connection. Due to the consequent wireless operation of the cameras the communication between the central control and the cameras is complex.

Another known driver vision support system (DE 43 39 600 A1) comprises at least one camera that may be moved using a special kinematics, which results in a costly mechanical setup.

It is an object of the invention to provide a driver vision support system for a self propelled agricultural machine which improves the vision of the driver regarding the surrounding of the self propelled agricultural machine taking into account the possible variations in configuration of the agricultural machine.

The above noted problem is solved by a driver vision support system according to claim 1.

The basic idea underlying the invention is to provide a certain adaptability of the driver vision support system to the variable configuration of the agricultural machine.

In detail the driver vision support system comprises at least one camera and at least one output device for the output of camera signals to the driver. The expression "camera signal" is to be understood in a broad sense including not only raw sensor signals but also electronically already processed signals that would be understood as "information" in the terminology of information technology. Accordingly, the expression "camera signal" also includes camera picture information that may be displayed with an output device.

The configuration of the driver vision support system is adaptable to the configuration of the agricultural machine by varying the location and/or the viewing direction of the at least one camera during normal use such that the driver receives camera signals via the output device of at least one camera which is directed to at least one blind area.

With the adaptability of the configuration of the driver vision support system to the configuration of the agricultural machine it is possible to eliminate as many blind areas as possible with the cameras available. The expression "eliminate" means that blind areas that go back on the respective configuration of the agricultural machine may be monitored by the respective cameras directed to those blind areas such that the user may detect obstacles or the like in those areas.

Due to the variability of the configuration of the driver vision support system it is possible to achieve a considerable elimination of blind areas with a low numbers of cameras needed.

An important aspect for the proposed solution is the concept of camera installation. A camera interface arrangement includes at least one camera reception for receiving a camera, which camera reception may be fixed to the agricultural machine or an attachment unit attached to the agricultural machine.

With this feature various camera receptions are fixed at various locations at the agricultural machine and/or at an attachment unit attached to the agricultural machine, such that the existing cameras may be attached to those receptions as needed in view of the blind areas which go back on the configuration of the agricultural machine.

A rather user friendly embodiment is subject of claim 10. Here a camera control is provided that distributes camera signals to different output devices depending on the detected location of the respective camera. If, for example, a camera is directed to the rear section of the agricultural machine the camera control may output the camera signals to a display screen that is integrated into a rear view mirror. The camera signals of a camera which is directed to the side of the tractor, however, may be output by the camera control via a display device which is part of a control terminal inside the driver cab.

A second teaching according to claim 12 is directed to a self propelled agricultural machine, especially a tractor with a driver vision support system as proposed above. All explanations given to the proposed driver vision support system arefully applicable to the proposed self propelled agricultural machine according to this second teaching.

In the following the invention is being explained referring to the drawing. In the drawing show
- Fig. 1: a proposed driver vision support system in its mounted state in a first configuration, and
- Fig. 2: the driver vision support system according to fig. 1 in a second configuration.

The proposed driver vision support system is designed for a self propelled agricultural machine 1, which in the preferred embodiment shown in the drawing is a tractor 1. Some of the possible alternatives for the self propelled agricultural machine 1 have been specified in the general part of the specification.

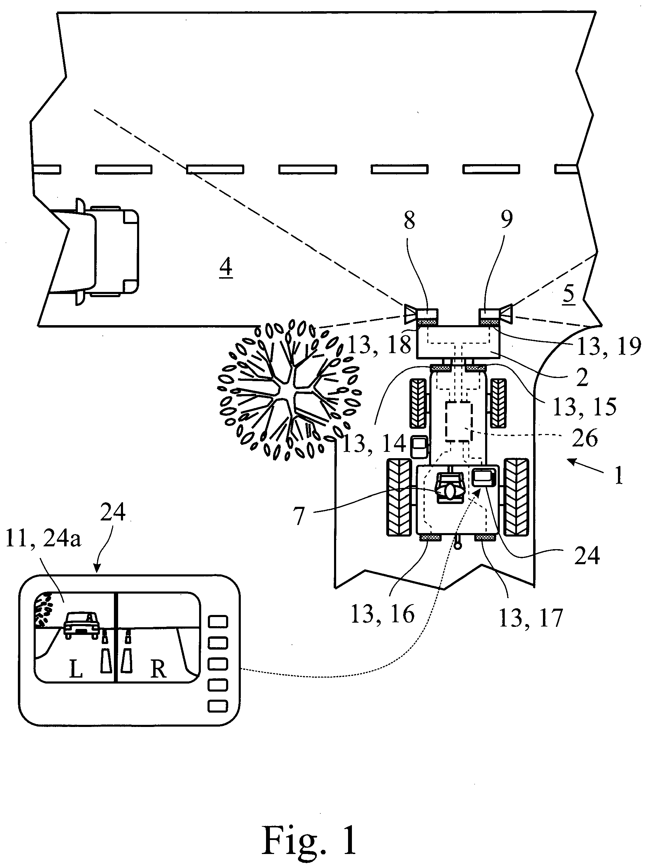

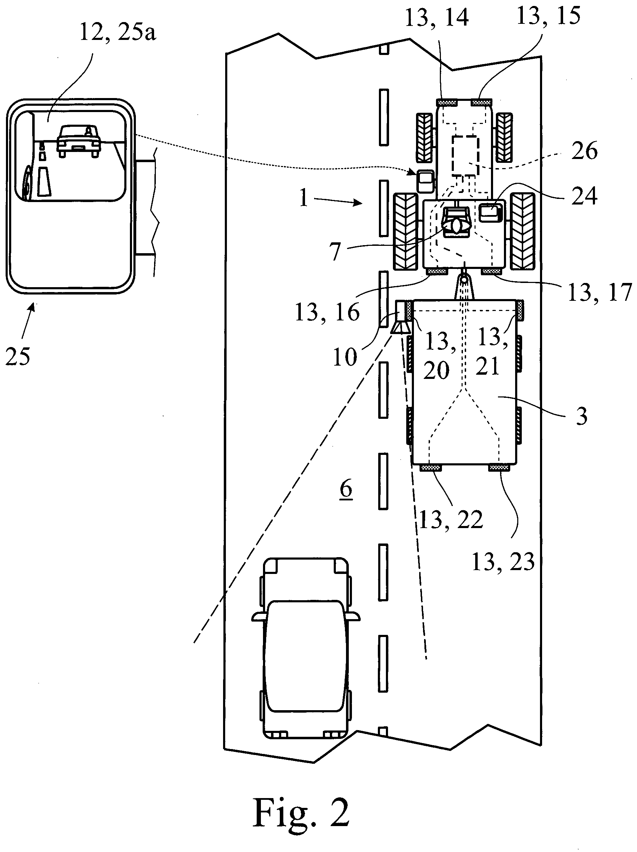

The agricultural machine 1 has a configuration, which configuration may be varied by changing the mechanical set up of the agricultural machine 1. In fig. 1 the agricultural machine 1 is provided with a front attachment unit 2 which may be a mower or the like. In fig. 2 the agricultural machine 1 is provided with a forage wagon 3 which is being pulled by the agricultural machine 1. As a matter of completeness it may be pointed out that all kinds of configurations of the agricultural machine 1 are possible. For example the agricultural machine may be provided with a rear attachment unit which may be a plow or the like.

It may be taken from fig. 1 and fig. 2 that depending on the configuration of the agricultural machine 1 different blind areas 4-6 may result which are outside the visual reach of the driver 7.

In order to eliminate such blind areas in the above noted sense the driver vision support system comprises at least one camera 8-10 and at least one output device 11, 12 for the output of camera signals to the driver 7.

The configuration of the driver vision support system is adaptable to the configuration of the agricultural machine 1 by varying the location of the at least one camera 8-10 during normal use such that the driver 7 receives camera signals via the output device 11, 12 of at least one camera 8-10 which is directed to at least one blind area 4-6.

In the embodiment shown in the drawing the variation of the configuration of the driver vision support system is performed by varying the location of the cameras 8-10. In addition or as an alternative it may be provided that the viewing direction of the at least one camera 8-10 may be varied during normal use.

In detail fig. 1 shows that due to the configuration of the agricultural machine 1 at least two blind areas 4, 5 result for the driver 7. In order to eliminate those blind areas 4, 5 the cameras 8, 9 are being provided at the front end of the front attachment unit 2, which cameras 8, 9 are being directed to the respective sides of the agricultural machine 1 in opposite directions. With this configuration of the driver vision support system the blind areas 4, 5 are effectively eliminated.

Fig. 2 shows a different configuration of the agricultural machine 1, which configuration leads to another blind area 6. This blind area 6 is being eliminated with the camera 10, which camera 10 is directed rearwards.

It may be pointed out that the two configurations of the driver vision support system shown in fig. 1 and 2 may be realized by only two cameras 8, 9. The camera 10 shown in fig. 2 may be, for example, the camera 8 shown in fig. 1. Here it becomes clear that a large number of configuration changes of the driver vision support system are possible with only a low number of cameras 8-10.

In order to realize the variable configuration of the driver vision support system a camera interface arrangement 13 is provided which allows the attachment and detachment of the at least one camera 8-10 and/or the variation of the viewing direction of the at least one camera 8-10 during normal use.

The camera interface arrangement 13 preferably comprises magnetic fixing means for a detachably attachment of the at least one camera 8-10 to the agricultural machine 1 or the attachment unit 2. The magnetic fixing means are cost-effective and robust against rough working conditions including dusty and/or dirty environments.

The camera interface arrangement 13 also includes a data interface which allows the camera signal to be transferred to the respective output device 11, 12. The data interface can be wire bound. Alternatively the data interface is wireless.

In most cases it is necessary that the camera interface arrangement 13 includes an electrical power interface for the voltage supply of the camera 8-10. However, it is possible that this can be omitted if the at least one camera 8-10 is battery powered.

In the preferred embodiment shown the camera interface arrangement 13 includes a number of camera receptions 14 to 23 which are all designed for detachably receiving a camera 8-10. The camera receptions 14-23 are fixed to the agricultural machine 1 as well as to the attachment unit 2 which is attached to the agricultural machine 1 in fig. 1.

The camera receptions 14-23 preferably each comprise a reception body that may undetachably be fixed to the agricultural machine 1 or to the attachment unit 2 attached to the agricultural machine 1. Preferably the camera receptions 14-23 are fixed to the respective component by an adhesive, by screws or the like.

The camera receptions 14-23 here and preferably are each provided with magnetic fixing means as noted above for a detachably reception of the at least one camera 8-10.

Preferably the camera receptions 14-23 not only provide a mechanical interface to the cameras 8-10, but may also provide the data interface and/or the power interface to the cameras 8-10. Accordingly, when a camera 8-10 is being attached to a camera reception 14-23 not only a mechanical connection, but also a data connection and/or a power connection is being established.

There are a number of possibilities for the realization of the output device 11, 12. In a preferred embodiment the output device 11, 12 is a visual output device. In certain applications, however, it may be advantageous to have an output device 11, 12 which is an acoustic output device in addition or alternatively.

In the drawing the output devices 11, 12 are display screens. In an easy to realize embodiment the display screen is a part of a stand-alone display device. In the embodiment shown in fig. 1 the display device 24a is part of a control terminal 24, which in a certain control mode shows the respective camera signals. Alternatively it may be provided that a display screen 25a is integrated into an inside or outside rearview mirror 25. The integration of the display device 25a into an outside rearview mirror 25 is shown in fig. 2 in addition to the display screen 24a of the control terminal 24.

Especially in the case that more than one output device 11, 12 is provided it is advantageous to also provide a camera control 26 which receives the camera signals and which controls the output of the camera signals to the output devices 11, 12. In the easiest case the driver manually defines which camera signals are to be displayed in which output device 11, 12. For this a manual input device may be provided.

However, in order to increase the user friendliness it may be preferable to have the camera control 26 automatically distribute camera signals to the optimal output device 11, 12. For this the camera control 26 has to be able to detect the location of the respective cameras 8-10. For this the camera receptions 14-23 may be helpful.

According to the proposed solution, the camera control 26 detects the location of a camera 8-10 by detecting in which camera reception 14-23 the camera 8-10 is actually being received. For this the camera control 26 may be connected to all data interfaces of all camera receptions 14-23, allowing to communicate with all cameras 8-10 once the cameras 8-10 are being received by the respective camera reception 14-23. For example, a simple data handshake may be performed when the respective camera 8-10 is being attached into a respective camera reception 14-23. After this handshake the camera control 26 has detected which camera 8-10 is being received in which camera reception 14-23.

In an especially advantageous embodiment the camera control 26 outputs the camera signals of a camera 8-10 depending on the location of the camera 8-10, which location is detected by the camera control 26 as noted above.

Further preferably the camera control 26 distributes camera signals to different devices 11, 12 depending on the detected location of the respective camera 8-10. This distribution of camera signals to different output devices 11, 12 is performed based on a predetermined distribution strategy stored in a memory of the camera control 26.

For example, as shown in fig. 1, the camera signals of cameras 8 and 9 are being displayed in the display screen 24a which is part of the control terminal 24. The camera signals of camera 10, which is displayed in fig. 2, however, is being displayed in the display screen 25a of the outside rearview mirror 25. This distribution of the camera signals to the different output devices 11, 12 increases the user friendliness of the driver vision support system.

One aspect shown in fig. 1 which is of independent importance is the fact that a single display screen 24a is used for displaying the camera signals of more than one camera 8-10, here of the two cameras 8, 9. This may be done in a split-screen-technique as shown by displaying the camera signals, here the respective camera pictures, side by side. Alternatively it is possible to display the camera signals of the more than one camera 8, 9 on the one display screen 24a sequentially.

It may be especially advantageous that the camera control 26 also performs image processing of the camera signals, in order to detect whether a predetermined class of objects is captured by a respective camera 8-10. For example, the object shown in the left part of the display device 24a of the control terminal 24 in fig. 1 may be detected as an approaching car based on image processing. This information may be output by another output device which may well be an acoustic output device as noted above.

According to another teaching a self propelled agricultural machine 1 with an above noted driver vision support system is claimed as such. It may be referred to all above noted explanations that have been given with respect to the proposed driver vision support system.

## Claims

1. Driver vision support system for a self propelled agricultural machine (1), wherein the agricultural machine (1) has a configuration, which configuration may be varied by changing the mechanical setup of the agricultural machine (1), wherein depending on the configuration of the agricultural machine (1) different blind areas (4-6) result which are outside the visual reach of the driver (7), wherein the driver vision support system comprises at least one camera (8-10) and at least one output device (11,12) for the output of camera signals to the driver (7), wherein the configuration of the driver vision support system is adaptable to the configuration of the agricultural machine (1) by varying the location and/or the viewing direction of the at least one camera (8-10) during normal use such that the driver (7) receives camera signals via the output device (11,12) of at least one camera (8-10) which is directed to at least one blind area (4-6), wherein a camera control (26) is provided which receives the camera signals and which controls the output of the camera signals to the at least one output device (11,12), wherein a camera interface arrangement (13) is provided which allows the attachment and detachment of the at least one camera (8-10) during normal use, **characterized in that** the camera interface arrangement (13) includes at least one camera reception (14-23) for receiving a camera (8-10), which camera reception (14-23) may be fixed to the agricultural machine (1) or an attachment unit (2) attached to the agricultural machine (1), that at least two camera receptions (14-23) are provided for receiving a camera (8-10) and that the camera control (26) detects the location of a camera (8-10) by detecting in which camera reception (14-23) the camera (8-10) is actually being received.

2. Driver vision support system according to claim 1, **characterized in that** the camera interface arrangement (13) allows the variation of the viewing direction of the at least one camera (8-10) during normal use.

3. Driver vision support system according to claim 1 or 2, **characterized in that** the camera interface arrangement (13) comprises magnetic fixing means for a detachably attachment of the at least one camera (8-10).

4. Driver vision support system according to one of the preceding claims, **characterized in that** the camera interface arrangement (13) includes a data interface, wherein the data interface is wire bound, or, wherein the data interface is wireless.

5. Driver vision support system according to one of the preceding claims, **characterized in that** the camera interface arrangement (13) includes an electrical power interface.

6. Driver vision support system according to one of the preceding claims, **characterized in that** the camera reception (14-23) comprises a reception body that may be fixed to the agricultural machine (1) or an attachment unit (2) attached to the agricultural machine (1).

7. Driver vision support system according to one of the preceding claims, **characterized in that** the camera reception (14-23) provides the data interface and/or the power interface to the camera (8-10).

8. Driver vision support system according to one of the preceding claims, **characterized in that** an output device (14-23) is a visual output device, and/or, wherein an output device (11,12) is an acoustic output device.

9. Driver vision support system according to one of the preceding claims, **characterized in that** an output device (11,12) is a display screen..

10. Driver vision support system according to one of the preceding claims, **characterized in that** the camera control (26) outputs the camera signals of a camera (8-10) depending on the location of the camera (8-10).

11. Driver vision support system according to one of the preceding claims, **characterized in that** the camera control (26) performs image processing of the camera signals and thereby detects whether a predetermined class of objects is captured by a respective camera (8-10).

12. Self propelled agricultural machine with a driver vision support system according to one of the preceding claims, wherein the agricultural machine (1) has a configuration, which configuration may be varied by changing the mechanical setup of the agricultural machine (1), wherein depending on the configuration of the agricultural machine (1) different blind areas (4-6) result which are outside the visual reach of the driver (7), wherein the driver vision support system comprises at least one camera (8-10) and at least one output device (11,12) for the output of camera signals to the driver (7), wherein the configuration of the driver vision support system is adaptable to the configuration of the agricultural machine (1) by varying the location and/or the viewing direction of the at least one camera (8-10) during normal use such that the driver (7) receives camera signals via the output device (11,12) of at least one camera (8-10) which is directed to at least one blind area (4-6).

## Patentansprüche

1. Fahrer-Sichtunterstützungssystem für eine selbstfahrende Landmaschine (1), wobei die Landmaschine (1) eine Konfiguration aufweist, wobei die Konfiguration durch verändern des mechanischen Aufbaus der Landmaschine (1) variiert werden kann, wobei in Abhängigkeit von der Konfiguration der Landmaschine (1) unterschiedliche tote Winkel (4-6) entstehen, die sich außerhalb der Sichtweite des Fahrers (7) befinden, wobei das Fahrer-Sichtunterstützungssystem mindestens eine Kamera (8-10) und mindestens eine Ausgabevorrichtung (11, 12) für die Ausgabe von Kamerasignalen an den Fahrer (7) umfasst, wobei die Konfiguration des Fahrer-Sichtunterstützungssystems durch variieren des Standorts und/oder der Blickrichtung der mindestens einen Kamera (8-10) bei Normalbetrieb so an die Konfiguration der Landmaschine (1) anpassbar ist, dass der Fahrer (7) Kamerasignale über die Ausgabevorrichtung (11, 12) der mindestens einen Kamera (8-10) empfängt, die auf mindestens einen toten Winkel (4-6) gerichtet ist, wobei eine Kamerasteuerung (26) vorgesehen ist, die die Kamerasignale empfängt und die die Ausgabe der Kamerasignale zu der mindestens einen Ausgabevorrichtung (11, 12) steuert,
wobei eine Kameraschnittstellenanordnung (13) vorgesehen ist, die das Anbringen und Lösen der mindestens einen Kamera (8-10) bei Normalbetrieb ermöglicht,
**dadurch gekennzeichnet, dass**
die Kameraschnittstellenanordnung (13) mindestens eine Kameraaufnahmeeinrichtung (14-23) zum Aufnehmen einer Kamera (8-10) aufweist, wobei die Kameraaufnahmeeinrichtung (14-23) an der Landmaschine (1) oder einer Anbringeinheit (2), die an der Landmaschine (1) angebracht ist, befestigt sein kann, dass mindestens zwei Kameraaufnahmeeinrichtungen (14-23) zum Aufnehmen einer Kamera (8-10) vorgesehen sind und dass die Kamerasteuerung (26) den Standort einer Kamera (8-10) durch Detektieren, in welcher Kameraaufnahmeeinrichtung (14-23) die Kamera (8-10) tatsächlich aufgenommen ist, detektiert.

2. Fahrer-Sichtunterntützungssystem nach Anspruch, 1, **dadurch gekennzeichnet, dass** die Kameraschnittstellenanordnung (13) die Variation der Blickrichtung der mindestens einen Kamera (8-10) bei Normalbetrieb ermöglicht.

3. Fahrer-Sichtunterstützungssystem nach Anspruch 1 oder 2, **dadurch gekennzeichnet, dass** die Kameraschnittstellenanordnung (13) magnetische Befestigungsmittel für ein lösbares Anbringen der mindestens einen Kamera (8-10) umfasst.

4. Fahrer-Sichtunterstützungssystem nach einem der vorhergehenden Ansprüche, **dadurch gekennzeichnet, dass** die Kameraschnittstellenanordnung (13) eine Datenschnittstelle aufweist, wobei die Datenschnittstelle drahtgebunden ist oder wobei die Datenschnittstelle drahtlos ist .

5. Fahrer-Sichtunterstützungssystem nach einem der vorhergehenden Ansprüche, **dadurch gekennzeichnet, dass** die Kameraschnittstellenanordnung (13) eine Stromversorgungsschnittstelle aufweist.

6. Fahrer-Sichtunterstützungssystem nach einem der vorhergehenden Ansprüche, **dadurch gekennzeichnet, dass** die Kameraaufnahmeeinrichtung (14-23) einen Aufnahmeeinrichtungskörper umfasst, der an der Landmaschine (1) oder einer Anbringeinheit (2), die an der Landmaschine (1) angebracht ist, befestigt sein kann.

7. Fahrer-Sichtunterstützungssystem nach einem der vorhergehenden Ansprüche, **dadurch gekennzeichnet, dass** die Kameraaufnahmeeinrichtung (14-23) die Datenschnittstelle und/oder die Stromversorgungsschnittstelle für die Kamera (8-10) bereitstellt.

8. Fahrer-Sichtunterstützungssystem nach einem der vorhergehenden Ansprüche, **dadurch gekennzeichnet, dass** eine Ausgabevorrichtung (14-23) eine optische Ausgabevorrichtung ist und/oder wobei eine Ausgabevorrichtung (11, 12) eine akustische Ausgabevorrichtung ist.

9. Fahrer-Sichtunterstützungssystem nach einem der vorhergehenden Ansprüche, **dadurch gekennzeichnet, dass** eine Ausgabevorrichtung (11, 12) ein Anzeigebildschirm ist.

10. Fahrer-Sichtunterstützungssystem nach einem der vorhergehenden Ansprüche, **dadurch gekennzeichnet, dass** die Kamerasteuerung (26) die Kamerasignale einer Kamera (8-10) in Abhängigkeit von dem Standort der Kamera (8-10) ausgibt.

11. Fahrer-Sichtunterstützungssystem nach einem der vorhergehenden Ansprüche, **dadurch gekennzeichnet, dass** die Kamerasteuerung (26) eine Bildverarbeitung der Kamerasignale durchführt und dadurch detektiert, ob eine vorbestimmte Klasse von Objekten von einer jeweiligen Kamera (8-10) aufgenommen wird.

12. Selbstfahrende Landmaschine mit einem Fahrer-Sichtunterstützungssystem nach einem der vorhergehenden Ansprüche, wobei die Landmaschine (1) eine Konfiguration aufweist, wobei die Konfiguration durch Verändern des mechanischen Aufbaus der Landmaschine (1) variiert werden kann, wobei in Abhängigkeit von der Konfiguration der Landmaschine (1) unterschiedliche tote Winkel (4-6) entstehen, die sich außerhalb der Sichtweite des Fahrers (7) befinden, wobei das Fahrer-Sichtunterstützungssystem mindestens eine Kamera (8-10) und mindestens eine Ausgabevorrichtung (11, 12) für die Ausgabe von Kamerasignalen an den Fahrer (7) umfasst, wobei die Konfiguration des Fahrer-Sichtunterstützungssystems durch variieren des Standorts und/oder der Blickrichtung der mindestens einen Kamera (8-10) bei Normalbetrieb so an die Konfiguration der Landmaschine (1) anpassbar ist, dass der Fahrer (7) Kamerasignale über die Ausgabevorrichtung (11, 12) mindestens einer Kamera (8-10) empfängt, die auf den mindestens einen toten Winkel (4-6) gerichtet ist.

## Revendications

1. Système de support de vision du conducteur pour une machine agricole automotrice (1), la machine agricole (1) ayant une configuration, laquelle configuration peut être modifiée en changeant le réglage mécanique de la machine agricole (1), différentes zones sans visibilité (4-6) qui se situent à l'extérieur du champ visuel du conducteur (7) apparaissant en fonction de la configuration de la machine agricole (1), le système de support de vision du conducteur comprenant au moins une caméra (8-10) et au moins un dispositif de sortie (11, 12) pour la délivrance de signaux de caméra au conducteur (7), la configuration du système de support de vision du conducteur étant adaptable à la configuration de la machine agricole (1) en faisant varier l'emplacement et/ou la direction de visualisation de l'au moins une caméra (8-10) en utilisation normale de telle sorte que le conducteur (7) reçoit des signaux de caméra par le biais du dispositif de sortie (11, 12) d'au moins une caméra (8-10) qui est dirigée vers au moins une zone sans visibilité (4-6),
dans lequel est prévue une commande de caméra (26) qui reçoit les signaux de caméra et qui commande la délivrance des signaux de caméra à l'au moins un dispositif de sortie (11, 12),
dans lequel est prévu un agencement d'interface de caméra (13) qui permet d'attacher et de détacheur l'au moins une caméra (8-10) en utilisation normale,
**caractérisé en ce que**
l'agencement d'interface de caméra (13) comporte au moins un dispositif d'accueil de caméra (14-23) pour recevoir une caméra (8-10), lequel dispositif d'accueil de caméra (14-23) peut être fixé à la machine agricole (1) ou une unité de fixation (2) fixée à la machine agricole (1), **en ce qu'**il est prévu au moins deux dispositifs d'accueil de caméra (14-23) pour recevoir une caméra (8-10) et **en ce que** la commande de caméra (26) détecte l'emplacement d'une caméra (8-10) en détectant le dispositif d'accueil de caméra (14-23) dans lequel la caméra (8-10) est réellement reçue.

2. Système de support de vision du conducteur selon la revendication 1, **caractérisé en ce que** l'agencement d'interface de caméra (13) permet de faire varier la direction de visualisation de l'au moins une caméra (8-10) en utilisation normale.

3. Système de support de vision du conducteur selon la revendication 1 ou 2, **caractérisé en ce que** l'agencement d'interface de caméra (13) comprend un moyen de fixation magnétique pour fixer de façon détachable l'au moins une caméra (8-10).

4. Système de support de vision du conducteur selon une des revendications précédentes, **caractérisé en ce que** l'agencement d'interface de caméra (13) comporte une interface de données, l'interface de données étant à liaison filaire, ou l'interface de données étant sans fil.

5. Système de support de vision du conducteur selon une des revendications précédentes, **caractérisé en ce que** l'agencement d'interface de caméra (13) comporte une interface d'alimentation électrique.

6. Système de support de vision du conducteur selon une des revendications précédentes, **caractérisé en ce que** le dispositif d'accueil de caméra (14-23) comprend un corps de dispositif d'accueil qui peut être fixé à la machine agricole (1) ou une unité de fixation (2) fixée à la machine agricole (1).

7. Système de support de vision du conducteur selon une des revendications précédentes, **caractérisé en ce que** le dispositif d'accueil de caméra (14-23) fournit l'interface de données est/ou l'interface d'alimentation à la caméra (8-10).

8. Système de support de vision du conducteur selon une des revendications précédentes, **caractérisé en ce qu'**un dispositif de sortie (14-23) est un dispositif de sortie visuelle, et/ou dans lequel un dispositif de sortie (11, 12) est un dispositif de sortie acoustique.

9. Système de support de vision du conducteur selon une des revendications précédentes, **caractérisé en ce qu'**un dispositif de sortie (11, 12) est un écran d'affichage.

10. Système de support de vision du conducteur selon une des revendications précédentes, **caractérisé en ce que** la commande de caméra (26) délivre les signaux de caméra d'une caméra (8-10) en fonction de l'emplacement de la caméra (8-10).

11. Système de support de vision du conducteur selon une des revendications précédentes, **caractérisé en ce que** la commande de caméra (26) effectue un traitement d'image sur les signaux de caméra et détecte ainsi si une classe prédéterminée d'objets est capturée par une caméra respective (8-10).

12. Machine agricole automotrice avec un système de support de vision du conducteur selon une des revendications précédentes, la machine agricole (1) ayant une configuration, laquelle configuration peut être modifiée en changeant le réglage mécanique de la machine agricole (1), différentes zones sans visibilité (4-6) qui se situent à l'extérieur du champ visuel du conducteur (7) apparaissant en fonction de la configuration de la machine agricole (1), le système de support de vision du conducteur comprenant au moins une caméra (8-10) et au moins un dispositif de sortie (11, 12) pour la délivrance de signaux de caméra au conducteur (7), la configuration du système de support de vision du conducteur étant adaptable à la configuration de la machine agricole (1) en faisant varier l'emplacement et/ou la direction de visualisation de l'au moins une caméra (8-10) en utilisation normale de telle sorte que le conducteur (7) reçoit des signaux de caméra par le biais du dispositif de sortie (11, 12) d'au moins une caméra (8-10) qui est dirigée vers au moins une zone sans visibilité (4-6).
